# EUROPÄISCHE PATENTSCHRIFT

(11) **EP 2 876 419 B1**
(45) Veröffentlichungstag und Bekanntmachung des Hinweises auf die Patenterteilung: **31.05.2017**
(21) Anmeldenummer: 14181895.5
(22) Anmeldetag: 22.08.2014
(51) Int. Cl.: G01K 1/14, G01K 7/16, G01K 13/02, H01C 7/02

(54) **Elastomerer Hohlkörper, insbesondere elastomerer Schlauch, mit Sensorelement zur Erfassung einer Temperatur sowie Verfahren hierzu**
Elastomer hollow body, in particular elastomer hose, having a sensor element for detecting a temperature and method for the same
Corps creux en élastomère, en particulier flexible en élastomère, doté d'un capteur destiné à détecter une température et procédé associé

(30) Priorität: 25.11.2013 DE 102013224024
(43) Veröffentlichungstag der Anmeldung: 27.05.2015
(73) Patentinhaber: ContiTech AG, 30165 Hannover (DE)
(72) Erfinder: Sostmann, Stefan, 30855 Langenhagen (DE); Koch, Harald, 35110 Frankenau-Alten Lotheim (DE); Lorenz, Corinna, 38106 Braunschweig (DE); Jungrichter, Frank, 34497 Korbach (DE)
(74) Vertreter: Preusser, Andrea

(56) Entgegenhaltungen:
- EP-A1- 0 862 191
- WO-A1-02/080200
- WO-A1-2009/038821
- DE-A1-102006 060 784
- DE-A1-102008 009 817
- DE-U1- 29 817 221

## Beschreibung

Die Erfindung betrifft einen elastomeren Hohlkörper, insbesondere einen elastomeren Schlauch, zur Leitung und bzw. oder Aufnahme flüssiger, gasförmiger und bzw. oder pastöser Medien mit einem Sensorelement zur Erfassung einer Temperatur gemäß dem Oberbegriff des Anspruchs 1 sowie ein Verfahren zur Temperaturerfassung eines derartigen elastomeren Hohlkörpers gemäß dem Anspruch 9.

Für zahlreiche technische Anwendungen ist die Erfassung der Temperatur von Objekten oder flüssigen, gasförmigen bzw. pastösen Medien erforderlich, um diese z.B. zur Überwachung der Einhaltung vorbestimmter Temperaturgrenzen oder zur Regelung von Prozessen auf vorbestimmte Temperaturen zu verwenden. So kann die Temperatur eines Mediums z.B. in einem Speicher wie einem Tank oder z.B. in einer Schlauchleitung zum Transport des Mediums relevant sein, um einen Prozess in Abhängigkeit dieser Temperatur zu betreiben oder die Temperatur des Mediums zu überwachen. Beispielsweise wird die Temperatur des Kühlwassers eines Verbrennungsmotors überwacht, um eine Überhitzung des Verbrennungsmotors zu verhindern. Ebenso werden bei Kompressorenschläuchen Temperaturüberwachungen eingesetzt.

Für derartige Temperaturmessungen z.B. bei Schläuchen werden derzeit üblicherweise Thermoelemente verwendet. Ein Thermoelement wandelt durch Thermoelektrizität Wärme in elektrische Energie um. Im Prinzip ist es ein Bauteil aus zwei unterschiedlichen

Metallen, die an einem Ende miteinander verbunden sind. Eine Temperaturdifferenz erzeugt durch den Wärmefluss eine elektrische Spannung, welche von außen z.B. über zwei Elektroden abgegriffen und mittels einer Messelektronik ausgewertet werden kann, z.B. über Ablesen aus einer Vergleichstabelle. Auf diese Weise führt eine Veränderung der Temperatur des Thermoelements über die entsprechend erzeugte elektrische Spannung zu einer von außerhalb des Schlauches erfassbaren Temperaturdifferenz. Diese Art der Temperaturerfassung ist grundsätzlich nicht-linear, wobei eine möglichst hohe Linearität gewünscht wird.

Derartige Thermoelemente können außen auf dem zu erfassenden Objekt wie z.B. einem Tank oder einem Schlauch aufgebracht werden. Dies ist einfach und auch nachträglich möglich, jedoch wird die Temperatur des Objektes und noch viel mehr die des darin befindlichen Mediums nur sehr zeitverzögert und unter Umständen auch ungenau erfasst. Um dies zu vermeiden, können Thermoelemente auch in den Aufbau integriert werden. Dies ist jedoch sehr aufwendig und kann zu Undichtigkeit des z.B. Tanks oder Schlauches bzw. zumindest zu einer Beeinträchtigung der Stabilität führen.

Die WO 2009/038821 A1 betrifft eine Fluidleitung mit einer Wand, einem Fluiddurchgang und einem Sensor, welcher ein Temperatursensor oder ein Drucksensor sein kann. Der Sensor ragt zumindest teilweise radial durch die Wand nach innen in den Fluiddurchgang.

Die DE 298 17 221 U1 betrifft ein Meßrohr für einen Wärmetauscher mit einem Thermoelement, dessen Sensor zur Messung der Temperatur eines durch das Meßrohr strömenden Mediums im Bereich der Innenfläche des Meßrohres angeordnet ist. Der Sensor ist im Bereich der Innenfläche des Meßrohres fixiert.

Die DE 10 2008 009 817 A1 betrifft einem Temperatursensor, der aus einem Verbundwerkstoff geformt ist. Der Verbundwerkstoff besteht aus einem keramischen Füllstoff und eine den Füllstoff einbettende, formbare Matrix. Der keramische Füllstoff weist einen elektrischen Widerstand auf, so dass der keramische Füllstoff als Sensorelement einer temperaturabhängigen Widerstandsänderung verwendet werden kann.

Die Matrix, in welche das Sensorelement eingebettet ist, kann einen glasartigen Werkstoff, Thermoplaste, Duroplaste, Elastomere oder Mischungen hieraus umfassen.

Die WO 02/080200 A1 betrifft eine elektrisch leitfähige Polymermischung, welche einen positiven Temperaturkoeffizienten (PTC) aufweist.

Die EP 0 862 191 A1 betrifft ein Material mit einem positiven Temperaturkoeffizienten (PTC), wobei das Material eine Matrix-Phase und eine elektrisch leitfähige Phase aufweist.

Die DE 10 2006 060 784 A1 betrifft ein PTC-Element, welches einen PTC-Elementkörper aufweist, der eine Polymermatrix und elektrisch leitende Teilchen enthält. Das PTC-Element weist ferner ein Paar Elektroden auf, die mit dem PTC-Elementkörper in Kontakt stehen, und eine Schutzschicht, die den PTC-Elementkörper so bedeckt, dass der PTC-Elementkörper versiegelt ist.

Eine Aufgabe der vorliegenden Erfindung ist es, einen elastomeren Hohlkörper, insbesondere einen elastomeren Schlauch, der eingangs beschriebenen Art bereit zu stellen, so dass seine Temperatur bzw. die des darin befindlichen Mediums kontinuierlich sowie einfacher, direkter und bzw. oder genauer erfasst werden kann. Zumindest sollen Alternativen zu den bekannten Arten der Temperaturerfassung bei elastomeren Hohlkörpern, insbesondere bei elastomeren Schläuchen, bereitgestellt werden.

Die Aufgabe wird erfindungsgemäß durch einen elastomeren Hohlkörper mit den Merkmalen gemäß Anspruch 1 sowie ein Verfahren zur Temperaturerfassung eines elastomeren Hohlkörpers mit den Merkmalen-gemäß Anspruch 9 gelöst. Vorteilhafte Weiterbildungen sind in den Unteransprüchen beschrieben.

Der Erfindung liegt dabei die Erkenntnis zugrunde, dass leitfähige elastomere Werkstoffe bei elastomeren Hohlkörpern einfacher eingesetzt und insbesondere in diese integriert werden können als z.B. Thermoelemente. Gleichzeitig kann der elastomere Werkstoff derart ausgebildet sein, dass er aufgrund einer elektrischen Eigenschaft wie z.B. seiner elektrischen Leitfähigkeit bzw. seines elektrischen Widerstandes oder einer dielektrischen Eigenschaft wie z.B. seiner elektrischen Kapazität oder seiner dielektrischen Permeabilität als Temperatursensor genutzt werden kann. Hierzu wird die Größe einer elektrischen bzw. dielektrischen Eigenschaft über den elastomeren Werkstoff erfasst und ausgewertet. Das Sensorelement bzw. dessen elastomerer Werkstoff kann als ganze temperaturempfindliche Schicht ausgestaltet sein oder als ein temperaturempfindlicher Teilbereich einer Schicht oder auch als ein temperaturempfindliches Mess-Pad, welches auf einer Schicht bzw. zwischen zwei Schichten angeordnet ist. Dabei wird das Sensorelement bzw. dessen elastomerer Werkstoff vorzugsweise geometrisch so ausgeführt, dass es bzw. er sich möglichst so in den Schichtaufbau des elastomeren Hohlkörpers integrieren lassen, dass sich dessen geometrische Beschaffenheit nicht bzw. möglichst wenig verändert. Bei elastomeren Schläuchen erfolgt die Integration vorzugsweise derart, dass sich trotz des Sensorelementes möglichst kleine Schlauchgeometrien realisieren lassen.

Gemäß einem Aspekt der vorliegenden Erfindung vergrößert sich die Größe der elektrischen/dielektrischen Eigenschaft, vorzugsweise die Größe des elektrischen Widerstands, des elastomeren Werkstoffs mit ansteigender Temperatur und bzw. oder der elektrische Widerstand des elastomeren Werkstoffs hängt nicht-linear, vorzugsweise zumindest abschnittsweise sprunghaft, besonders bevorzugt sprunghaft bei ca. 120°C, von der Temperatur ab. Über einen steigenden elektrischen Widerstand bei ansteigender Temperatur kann ein einfach auszuwertender Zusammenhang zwischen diesen Größen erreicht werden. Ist dieser Zusammenhang gleichzeitig nicht-linear, so treten in unterschiedlichen Temperaturbereichen unterschiedliche Empfindlichkeiten auf, die je nach Anwendungsfall vorteilhaft genutzt werden können. Erhöht sich der Anstieg des elektrischen Widerstands überproportional bei steigender Temperatur, so tritt gerade bei höheren Temperaturen, die für Anwendungen der Überwachung von Überhitzung besonders relevant sind, eine erhöhte Messgenauigkeit auf. Kommt es bei der Überwachung von Überhitzungen auf bestimmte Grenzwerte an, z.B. bei Anwendungen im Automobilbereich, z.B. dort bei der Temperaturüberwachung von Kompressorenschläuchen, so ist ein sprunghafter Anstieg des elektrischen Widerstands in diesem Temperaturbereich besonders vorteilhaft, um mit einer einfachen Messauswertung das Überschreiten einer Grenztemperatur von z.B. 120°C zu erfassen.

Gemäß einem weiteren Aspekt der vorliegenden Erfindung ist das Sensorelement in einer ersten Schicht des elastomeren Hohlkörpers, welche vorzugsweise direkt mit dem Medium in Kontakt steht, integriert angeordnet. Auf diese Weise wird der Aufbau des elastomeren Hohlkörpers in seiner Dicke nicht verändert. Ferner behindert die Schicht selbst nicht die Wärmeübertragung zum Sensorelement hin, so dass die Temperatur mittels des Sensorelementes direkter und damit genauer und schneller erfasst werden kann als bei einer Anordnung des Sensorelementes auf der dem zu erfassenden Medium abgewandten Seite der Schicht. Dabei wird die Temperaturerfassung weiter begünstigt, falls die das Sensorelement aufweisende Schicht direkt mit dem zu erfassenden Medium in Kontakt steht, weil auf diese Weise auch das Sensorelement direkt mit dem Medium in Kontakt steht und so dessen Temperatur direkt und unmittelbar und somit auch ohne Zeitverzögerung erfassen kann.

Gemäß einem weiteren Aspekt der vorliegenden Erfindung ist das Sensorelement auf einer dem Medium zugewandten Seite einer ersten Schicht des elastomeren Hohlkörpers, welche vorzugsweise direkt mit dem Medium in Kontakt steht, angeordnet. Auf diese Weise kann auf eine Integration des Sensorelementes in die Schicht verzichtet werden, was die Herstellung dieser Schicht und damit des gesamten elastomeren Hohlkörpers vereinfacht. Gleichzeitig kann das Sensorelement auf dieser Schicht innen, d.h. dem Medium zugewandt, angeordnet werden, um dessen Temperatur schneller und direkter erfassen zu können. Dies wird besonders dadurch unterstützt, falls diese Schicht die innerste Schicht des elastomeren Hohlkörpers ist, welches direkt mit dem Medium in Kontakt steht, weil dann das Sensorelement mit dem Medium einen direkten Kontakt hat bzw. sogar in dieses eintaucht. Auch kann das Sensorelement so nachträglich auf dieser Schicht vorgesehen werden, was die Montage erleichtert und eine Nachrüstung auf bestehende Anwendungen ermöglicht.

Gemäß einem weiteren Aspekt der vorliegenden Erfindung ist das Sensorelement auf einer dem Medium abgewandten Seite einer ersten Schicht des elastomeren Hohlkörpers, welche vorzugsweise direkt mit dem Medium in Kontakt steht, angeordnet. Auf diese Weise kann das Sensorelement vor dem Medium geschützt werden, z.B. weil das Medium und das Material des Sensorelementes miteinander unverträglich sind, z.B. weil das Medium nicht durch das Material des Sensorelementes verunreinigt werden darf bzw. das Medium das Sensorelement beschädigen oder sogar zerstören kann. Auch ist eine nachträgliche Montage des Sensorelementes von außen einfacher möglich als im Inneren der Schicht. Steht diese Schicht mit dem Medium im direkten Kontakt, so ist dennoch eine vergleichsweise direkte und zeitnahe Erfassung der Temperatur des Mediums möglich.

Gemäß einem weiteren Aspekt der vorliegenden Erfindung weist der elastomere Hohlkörper ferner eine zweite Schicht auf, welche einen Festigkeitsträger aufweist und welche vorzugsweise auf einer dem Medium abgewandten Seite der ersten Schicht angeordnet ist. Als Festigkeitsträger können vorzugsweise Gewirke, Gestricke bzw. Geflechte aus z.B. textilen Materialien verwendet werden. Hierdurch kann die Stabilität des elastomeren Hohlkörpers erhöht werden. Ist der Festigkeitsträger auf einer dem Medium abgewandten Seite der ersten Schicht angeordnet, so bleiben die erste Schicht weiterhin in direkterem Kontakt mit dem Medium und ein innenseitig oder innerhalb der ersten Schicht angeordnetes Sensorelement ebenfalls. Wird das Sensorelement auf einer dem Medium abgewandten Seite der ersten Schicht angeordnet, ist das Sensorelement zwischen den beiden Schichten, d.h. innerhalb des Festigkeitsträgers vorzusehen, um weiterhin einen möglichst direkten Kontakt zum zu erfassenden Medium herzustellen.

Gemäß einem weiteren Aspekt der vorliegenden Erfindung weist der elastomere Werkstoff zwei einander gegenüberliegende Kontaktstellen auf, die vorzugsweise in Richtung der größten Erstreckung des elastomeren Werkstoffs voneinander beabstandet sind. Über diese Kontaktstellen kann ein Abgriff der Größe der elektrischen bzw. dielektrischen Eigenschaft des elastomeren Werkstoffs wie z.B. eine elektrische Spannung erfolgen. Um hierbei einen möglichst großen Wert der Größe zu erhalten, sind die Kontaktstellen vorzugsweise so angeordnet, dass zwischen ihnen ein möglichst großer Abstand über die Fläche des elastomeren Werkstoffs besteht.

Gemäß einem weiteren Aspekt der vorliegenden Erfindung weist der elastomere Werkstoff eine vulkanisierte leitfähige Kautschukmischung auf, die wenigstens einen polaren oder unpolaren Kautschuk und wenigstens einen leitfähigen Füllstoff und bzw. oder wenigstens ein leitfähiges Additiv und wenigstens einen Thermoplasten und weitere Zusatzstoffe enthält. Vorteilhaft ist hierbei, dass sich durch die Kombination von leitfähigem Füllstoff bzw. Additiv, Kautschuk und Thermoplasten Kautschukmischungen ergeben, bei denen durch die Wahl des Thermoplasten die Widerstandsabhängigkeit des Vulkanisats von der Temperatur definiert eingestellt werden kann. Hierbei findet überraschenderweise im gewünschten Temperaturbereich eine sprunghafte Änderung der Leitfähigkeit statt, so dass die erfindungsgemäße Kautschukmischung als Widerstandstemperatursensor eingesetzt werden kann. Die Funktion des Widerstands über der Temperatur ist hierbei nicht linear.

Die vulkanisierte Kautschukmischung enthält wenigstens einen polaren oder unpolaren Kautschuk. Die Begriffe Kautschuk und Elastomer werden in dieser Schrift synonym verwendet. Unpolare Elastomere sind reine Kohlenwasserstoffsysteme, deren Makromoleküle nur aus Kohlenstoff- und Wasserstoffatomen bestehen. Sie sind nicht mineralölbeständig. Polare Elastomere sind mineralölbeständig und haben in Makromolekül außer Kohlenstoff- und Wasserstoffatomen andere Atome, z.B. Chlor, Fluor, oder Atomgruppen z.B. Nitril-, Estergruppen, die eine Polarität im Makromolekül hervorrufen. Der polare oder unpolare Kautschuk ist dabei ausgewählt aus der Gruppe, bestehend aus natürlichem Polyisopren und bzw. oder synthetischem Polyisopren und bzw. oder Butadien-Kautschuk und bzw. oder Styrolbutadienkautschuk und bzw. oder Flüssigkautschuken und bzw. oder Halobutylkautschuk und bzw. oder Polynorbornen und bzw. oder Isopren-Isobutylen-Copolymer und bzw. oder Ethylen-Propylen-DienKautschuk und bzw. oder Nitrilkautschuk und bzw. oder Chloroprenkautschuk und bzw. oder Acrylat-Kautschuk und bzw. oder Fluorkautschuk und bzw. oder Silikon-Kautschuk und bzw. oder Epichlorhydrinkautschuk und bzw. oder Styrol-Isopren-Butadien-Terpolymer und bzw. oder hydrierter Acrylnitrilbutadienkautschuk und bzw. oder Isopren-Butadien-Copolymer und bzw. oder Ethylen-Propylen-Mischpolymerisat und bzw. oder Ethylen-Propylen-Dien-Mischpolymerisat (EPDM) und bzw. oder (teil)hydrierter Nitrilkautschuk und bzw. oder Butylkautschuk und bzw. oder Brombutylkautschuk und bzw. oder Chlorbutylkautschuk und bzw. oder Chlorsulfoniertes Polyethylen und bzw. oder Chlorsulfoniertes Polyethylen und bzw. oder Polyepichlorhydrin und bzw. oder EthylenVinylacetat-Kautschuk und bzw. oder Acrylat-Kautschuk und bzw. oder Fluorierter Methylsiliconkautschuk und bzw. oder Perfluorenierter Propylen-Kautschuk und bzw. oder Perflurocarbon-Kautschuk und bzw. oder Polyurethan. Das Elastomer ist bevorzugt in Mengen von wenigstens 50 php in der erfindungsgemäßen Kautschukmischung vorhanden. Es ist auch möglich, dass eine Kombination von wenigstens zwei Elastomeren verwendet wird. Die obige Mengenangabe bezieht sich in diesem Fall dann auf die Gesamtmenge an Elastomeren.

Bevorzugt ist es weiterhin, dass die Kautschukmischung wenigstens einen leitfähigen Füllstoff und bzw. oder wenigstens ein leitfähiges Additiv enthält. Hierbei handelt es sich bevorzugt um wenigstens einen leitfähigen Ruß als Füllstoff bzw. um wenigstens eine ionische Flüssigkeit als leitfähiges Additiv. Der leitfähige Füllstoff wird in einer bevorzugten Ausführungsform in Mengen von 5 bis 100 php, besonders bevorzugt in Mengen von 10 bis 80 php, ganz besonders bevorzugt in Mengen von 20 bis 60 php, eingesetzt. Die in dieser Schrift verwendete Angabe php (parts per hundred parts of polymer by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Polymere bezogen. Der Begriff Polymere umfasst hierbei Kautschuke, Elastomere, thermoplastische Elastomere (TPE) und Thermoplasten (TP).

In einer besonders bevorzugten Ausführungsform wird ein leitfähiger Ruß mit einer Ölabsorptionszahl (OAN) gemäß ISO 4656, zwischen 90 bis 150 ml/100g, bevorzugt zwischen 110 und 150 ml/100g und bzw. oder einer BET-Zahl gemäß ISO 4652 zwischen 20 bis 200 m2/g, bevorzugt zwischen 30 und 180 m2/g eingesetzt. Die OAN-Zahl ist hierbei eine wichtige Größe für die Bestimmung der Struktur des Rußes, während mittels der BET-Zahl die spezifische Oberfläche des Rußes angegeben werden kann. Alternative leitfähige Füllstoffe können u.a. Kohlenstoffnanoröhren, metallische Partikel oder auch Kohlenstofffasern sein.

Die Kautschukmischung kann neben den leitfähigen Füllstoffen auch noch weitere Füllstoffe wie nicht-leitfähige Ruße, Kieselsäure, Aluminiumhydroxid, Schichtsilikate, Kalk, Kreide, Stärke, Magnesiumoxid, Titandioxid, Kautschukgele, Kurzfasern usw. in beliebigen Kombinationen enthalten. In einer besonderen Ausführungsform ist die vulkanisierte Kautschukmischung allerdings frei von weiteren Füllstoffen und enthält nur die oben genannten leitfähigen Füllstoffe.

In einer weiteren besonderen Ausführungsform enthält die Kautschukmischung keine leitfähigen Füllstoffe, sondern lediglich wenigsten ein leitfähiges Additiv, wie z.B. wenigstens eine ionische Flüssigkeit, und wenigstens einen der oben aufgeführten weiteren Füllstoffe.

Bevorzugt ist es, dass in der Kautschukmischung noch wenigstens ein Thermoplast (TP) enthalten ist. Hierbei können alle der fachkundigen Person bekannten Thermoplasten, wie bspw. PE, insbesondere HDPE, LDPE, LLDPE; UHMWPE, PS, PP. PVC, PC, PBT, PET, PA, POM, PC/ABS, PPO/PS, SAN, ABS, PMMA, PEEK, PPS, PES, PAI, PEI, PSU oder APE, verwendet werden. Besonders geeignet PE, insbesondere LLDPE, PPE und bzw. oder PPO. Die genannten können hierbei alleine oder in Kombination verwendet werden. Die Nomenklatur der Thermoplasten erfolgt gemäß DIN EN ISO 1042-12002-06. Die Gesamtmenge des bzw. der Thermoplasten beträgt bevorzugt 20 bis 150 php, besonders bevorzugt 30 bis 150 php und ganz besonders bevorzugt 50 bis 100 php.

Es hat sich überraschend gezeigt, dass der Widerstand der vulkanisierten Kautschukmischung stark mit der Schmelztemperatur des Thermoplasten verknüpft ist. So steigt bspw. bei Verwendung von PE der Widerstand des Vulkanisats deutlich bei der Schmelztemperatur des PE an. Somit kann durch die Wahl eines geeigneten Thermoplasten und damit dessen Schmelzpunkt diese Widerstandänderung in den gewünschten Temperaturbereich verschoben werden. Der Schmelzpunkt des Thermoplasten liegt bevorzugt zwischen 30 und 250°C, besonders bevorzugt zwischen 100 und 200°C. Bei einer Mischung aus zwei oder mehreren Thermoplasten bezieht sich die Angabe des Schmelzpunktes auf das TP-Gemisch.

Die vorliegende Erfindung betrifft auch ein Verfahren zur Temperaturerfassung eines elastomeren Hohlkörpers wie zuvor beschrieben mit den Schritten:
- Erfassen einer Größe einer elektrischen bzw. dielektrischen Eigenschaft des elastomeren Werkstoffs des Sensorelementes, und
- Bestimmen einer Temperatur in Abhängigkeit der erfassten Größe der elektrischen bzw. dielektrischen Eigenschaft.

Ein derartiges Verfahren auf das zuvor beschriebene Sensorelement anzuwenden ist vorteilhaft, weil dessen Vorzüge so für ein einfaches und genaues Messverfahren genutzt werden können. Auch müssen bestehende Messverfahren und Anwendungen nur unwesentlich verändert werden, weil z.B. bei der Verwendung von Thermoelementen ebenfalls eine elektrische Spannung über zwei Kontakte von außen abgegriffen und ausgewertet wird. Dies vereinfacht die Anwendung des zuvor beschriebenen Sensorelementes auf bestehende Anwendungen und Messeinrichtungen.

Gemäß einem weiteren Aspekt der vorliegenden Erfindung weist das Verfahren ferner die Schritte auf:
- Vergleichen der bestimmten Temperatur mit einer vorbestimmten Grenztemperatur, und
- im Ansprechen auf ein Überschreiten der vorbestimmten Grenztemperatur, Auslösen einer Reaktion hierauf.

Die Grenztemperatur hängt vom Anwendungsfall ab. Aus diesem Vergleich z.B. in einer Messeinrichtung oder in einer Steuerung können dann Reaktionen auf die Überschreitung der Grenztemperatur abgeleitet werden wie z.B. das Abbrechen eines Prozesses oder das Ausgeben eines Warnhinweises, so dass ein weiteres Ansteigen der Temperatur verhindert werden kann.

Ausführungsbeispiele und weitere Vorteile der Erfindung werden nachstehend im Zusammenhang mit den folgenden Figuren erläutert. Darin zeigt:
- Fig. 1: eine perspektivische schematische Darstellung eines elastomeren Hohlkörpers mit einem Sensorelement gemäß einem ersten Ausführungsbeispiel der vorliegenden Erfindung;
- Fig. 2: eine perspektivische schematische Darstellung eines elastomeren Hohlkörpers mit einem Sensorelement gemäß einem zweiten Ausführungsbeispiel der vorliegenden Erfindung; und
- Fig. 3: eine perspektivische schematische Darstellung eines elastomeren Hohlkörpers mit einem Sensorelement gemäß einem dritten Ausführungsbeispiel der vorliegenden Erfindung;

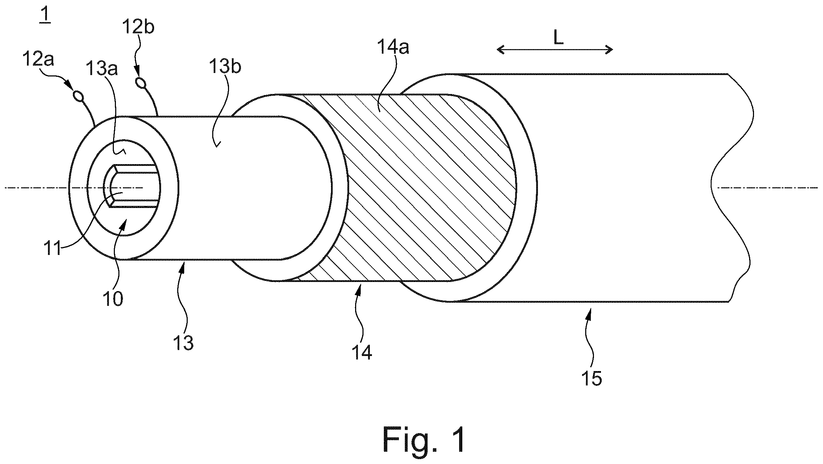

Fig. 1 zeigt eine perspektivische schematische Darstellung eines elastomeren Hohlkörpers 1 mit einem Sensorelement 10 gemäß einem ersten Ausführungsbeispiel der vorliegenden Erfindung. Der elastomere Hohlkörper 1 ist als elastomerer Schlauch 1 ausgebildet mit einer ersten innersten Schicht 13, einer zweiten mittleren Schicht 14 und einer dritten äußersten Schicht 15. Die zweite Schicht 14 weist einen Festigkeitsträger 14a auf. In diesem ersten Ausführungsbeispiel ist ein Sensorelement 10 auf der Innenseite 13a der ersten Schicht angeordnet, welche dem Medium zugewandt ist, welches im Inneren des Schlauches 1 transportiert werden kann. Das Sensorelement 10 weist einen elastomeren Werkstoff 11 auf, der an zwei sich in Längsrichtung L gegenüberliegenden Seiten mit Kontaktstellen 12a, 12b versehen ist. So kann eine elektrische bzw. dielektrische Größe, welche eine Temperaturabhängigkeit aufweist, über den elastomeren Werkstoff 11 mittels der Kontaktstellen 12a, 12b abgegriffen und zwecks Bestimmung der Temperatur des Sensorelementes 10 und damit seiner Umgebung, hier das mit dem elastomeren Werkstoff 11 direkt in Kontakt stehende Medium, ausgewertet werden.

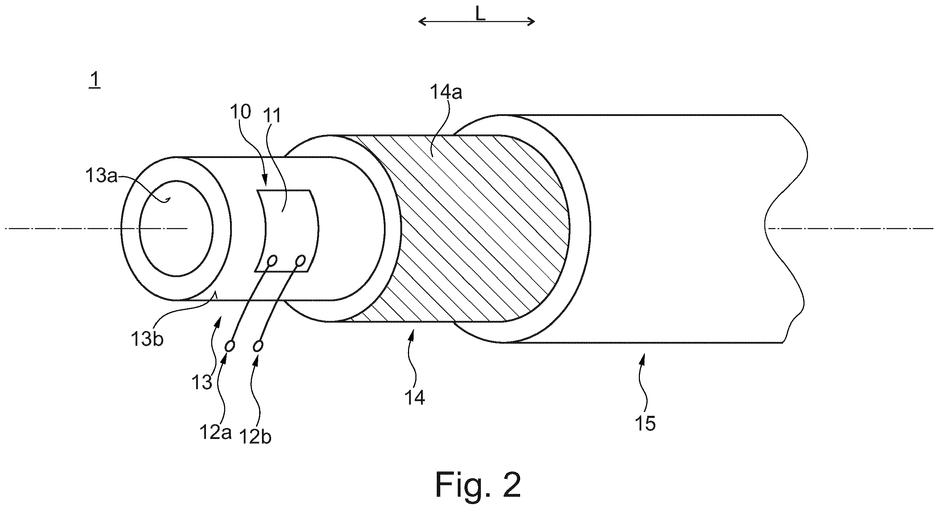

Fig. 2 zeigt eine perspektivische schematische Darstellung eines elastomeren Hohlkörpers 1 mit einem Sensorelement 10 gemäß einem zweiten Ausführungsbeispiel der vorliegenden Erfindung. In diesem Fall ist das Sensorelement 10 in die erste Schicht 13 integriert.

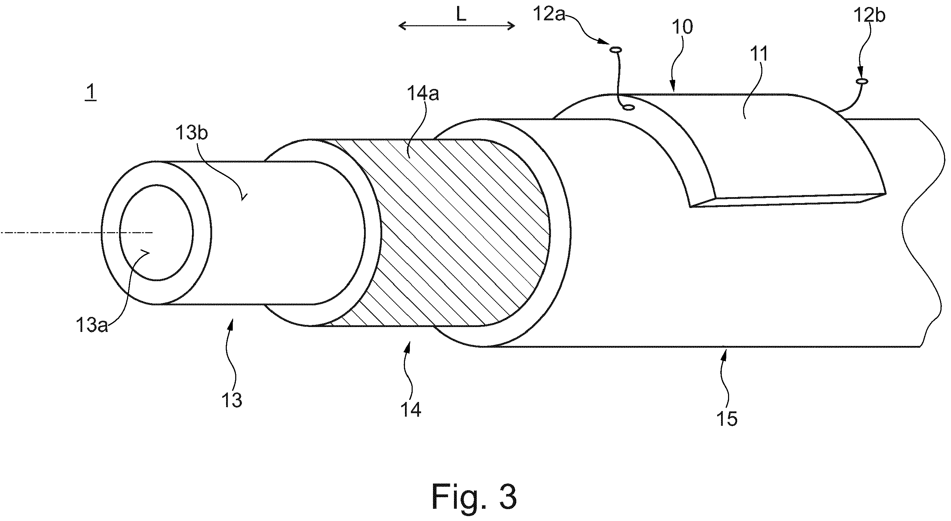

Fig. 3 zeigt eine perspektivische schematische Darstellung eines elastomeren Hohlkörpers 1 mit einem Sensorelement 10 gemäß einem dritten Ausführungsbeispiel der vorliegenden Erfindung. In diesem Fall ist das Sensorelement 11 auf der dem Medium abgewandeten Seite 13b der ersten Schicht 13 angeordnet.

### Bezugszeichenliste

### (Teil der Beschreibung)

- L: Richtung der größten Erstreckung des elastomeren Werkstoffs 11, Längsrichtung

- 1: Elastomerer Hohlkörper, elastomerer Schlauch
- 10: Sensorelement
- 11: elastomerer Werkstoff des Sensorelementes 10
- 12a, 12b: Kontaktstellen des elastomeren Werkstoffs 11
- 13: ersten Schicht, innerste Schicht
- 13a: dem Medium zugewandten Seite der ersten Schicht
- 13b: dem Medium abgewandten Seite der ersten Schicht
- 14: zweite Schicht, mittlere Schicht
- 14b: Festigkeitsträger der zweiten Schicht 14
- 15: dritte Schicht, äußerste Schicht

## Patentansprüche

1. Elastomerer Hohlkörper (1), insbesondere elastomerer Schlauch (1), zur Leitung und/oder Aufnahme flüssiger, gasförmiger und/oder pastöser Medien, mit einem Sensorelement (10) zur Erfassung einer Temperatur,
**dadurch gekennzeichnet, dass** das Sensorelement (10) einen elastomeren Werkstoff (11) mit wenigstens einer temperaturabhängigen elektrischen/dielektrischen Eigenschaft aufweist, deren Größe erfassbar ist.

2. Elastomerer Hohlkörper (1) nach Anspruch 1,
wobei sich die Größe der elektrischen/dielektrischen Eigenschaft, vorzugsweise die Größe des elektrischen Widerstands, des elastomeren Werkstoffs (11) mit ansteigender Temperatur vergrößert, und/oder
wobei der elektrische Widerstand des elastomeren Werkstoffs (11) nicht-linear, vorzugsweise zumindest abschnittsweise sprunghaft, besonders bevorzugt sprunghaft bei ca. 120°C, von der Temperatur abhängt.

3. Elastomerer Hohlkörper (1) nach einem der Ansprüche 1 oder 2,
wobei das Sensorelement (10) in einer ersten Schicht (13) des elastomeren Hohlkörpers (1), welche vorzugsweise direkt mit dem Medium in Kontakt steht, integriert angeordnet ist.

4. Elastomerer Hohlkörper (1) nach einem der Ansprüche 1 oder 2,
wobei das Sensorelement (10) auf einer dem Medium zugewandten Seite (13a) einer ersten Schicht (13) des elastomeren Hohlkörpers (1), welche vorzugsweise direkt mit dem Medium in Kontakt steht, angeordnet ist.

5. Elastomerer Hohlkörper (1) nach einem der Ansprüche 1 oder 2,
wobei das Sensorelement (10) auf einer dem Medium abgewandten Seite (13b) einer ersten Schicht (13) des elastomeren Hohlkörpers (1), welche vorzugsweise direkt mit dem Medium in Kontakt steht, angeordnet ist.

6. Elastomerer Hohlkörper (1) nach einem der Ansprüche 3 bis 5,
ferner mit einer zweiten Schicht (14), welche einen Festigkeitsträger (14a) aufweist und welche vorzugsweise auf einer dem Medium abgewandten Seite (13b) der ersten Schicht (13) angeordnet ist.

7. Elastomerer Hohlkörper (1) nach einem der vorherigen Ansprüche,
wobei der elastomere Werkstoff (11) zwei einander gegenüberliegende Kontaktstellen (12a, 12b) aufweist, die vorzugsweise in Richtung (L) der größten Erstreckung des elastomeren Werkstoffs (11) voneinander beabstandet sind.

8. Elastomerer Hohlkörper (1) nach einem der vorherigen Ansprüche,
wobei der elastomere Werkstoff (11) eine vulkanisierte leitfähige Kautschukmischung aufweist, die wenigstens einen polaren oder unpolaren Kautschuk und wenigstens einen leitfähigen Füllstoff und/oder wenigstens ein leitfähiges Additiv und wenigstens einen Thermoplasten und weitere Zusatzstoffe enthält.

9. Verfahren zur Temperaturerfassung eines elastomeren Hohlkörpers (1) nach einem der vorherigen Ansprüche, mit den Schritten:
Erfassen einer Größe einer elektrischen bzw. dielektrischen Eigenschaft des elastomeren Werkstoffs (11) des Sensorelementes (10), und
Bestimmen einer Temperatur in Abhängigkeit der erfassten Größe der elektrischen bzw. dielektrischen Eigenschaft.

10. Verfahren nach Anspruch 9, ferner mit den Schritten:
Vergleichen der bestimmten Temperatur mit einer vorbestimmten Grenztemperatur, und
im Ansprechen auf ein Überschreiten der vorbestimmten Grenztemperatur, Auslösen einer Reaktion hierauf.

## Claims

1. Elastomer hollow body (1), in particular elastomer hose (1), for conducting and/or receiving liquid, gaseous and/or pasty media, having a sensor element (10) for detecting a temperature,
**characterized in that**
the sensor element (10) comprises an elastomer material (11) with at least one temperature-dependent electrical/dielectric property, the magnitude of which can be detected.

2. Elastomer hollow body (1) according to Claim 1,
the magnitude of the electrical/dielectric property, preferably the magnitude of the electrical resistance, of the elastomer material (11) increasing with increasing temperature, and/or the electrical resistance of the elastomer material (11) depending on the temperature non-linearly, preferably at least in some ranges abruptly, particularly preferably abruptly at about 120°C.

3. Elastomer hollow body (1) according to either of Claims 1 and 2,
the sensor element (10) being arranged in an integrated manner in a first layer (13) of the elastomer hollow body (1) that is preferably directly in contact with the medium.

4. Elastomer hollow body (1) according to either of Claims 1 and 2,
the sensor element (10) being arranged on a side (13a) of a first layer (13) of the elastomer hollow body (1) that is facing the medium and is preferably directly in contact with the medium.

5. Elastomer hollow body (1) according to either of Claims 1 and 2,
the sensor element (10) being arranged on a side (13b) of a first layer (13) of the elastomer hollow body (1) that is facing away from the medium and is preferably directly in contact with the medium.

6. Elastomer hollow body (1) according to one of Claims 3 to 5,
also having a second layer (14), which comprises a reinforcing element (14a) and is preferably arranged on a side (13b) of the first layer (13) that is facing away from the medium.

7. Elastomer hollow body (1) according to one of the preceding claims,
the elastomer material (11) comprising two contact points (12a, 12b) that lie opposite one another and are preferably spaced apart from one another in the direction (L) of the greatest extent of the elastomer material (11).

8. Elastomer hollow body (1) according to one of the preceding claims,
the elastomer material (11) comprising a vulcanized conductive rubber mixture, which contains at least one polar or non-polar rubber and at least one conductive filler and/or at least one conductive additive and at least one thermoplastic and further additives.

9. Method for detecting the temperature of an elastomer hollow body (1) according to one of the preceding claims, comprising the following steps:
detecting a magnitude of an electrical or dielectric property of the elastomer material (11) of the sensor element (10), and
determining a temperature in dependence on the detected magnitude of the electrical or dielectric property.

10. Method according to Claim 9, also comprising the following steps:
comparing the determined temperature with a predetermined limiting temperature, and
in response to exceeding the predetermined limiting temperature, triggering a reaction thereto.

## Revendications

1. Corps creux (1) élastomère, notamment flexible (1) en élastomère destiné à conduire et/ou à recevoir des milieux liquides, gazeux et/ou pâteux, avec un élément capteur (10) destiné à détecter une température,
**caractérisé en ce que**
l'élément capteur (10) comporte une matière élastomère (11) avec au moins une propriété électrique/diélectrique dépendant de la température, dont la grandeur est détectable.

2. Corps creux (1) élastomère selon la revendication 1,
la grandeur de la propriété électrique/diélectrique, de préférence la grandeur de la résistance électrique de la matière élastomère (11) augmentant au fur et à mesure de la montée en température et/ou
la résistance électrique de la matière élastomère (11) dépendant de manière non linéaire, de préférence de manière brusque au moins par sections, de façon particulièrement préférée de manière brusque à environ 120 °C de la température.

3. Corps creux (1) en élastomère selon l'une quelconque des revendications 1 ou 2,
l'élément capteur (10) étant placé en étant intégré dans une première couche (13) du corps creux (1) en élastomère, laquelle est de préférence en contact direct avec le milieu.

4. Corps creux (1) en élastomère selon l'une quelconque des revendications 1 ou 2,
l'élément capteur (10) étant placé sur une face (13a) dirigée vers le milieu d'une première couche (13) du corps creux (1) en élastomère, laquelle est de préférence en contact direct avec le milieu.

5. Corps creux (1) en élastomère selon l'une quelconque des revendications 1 ou 2,
l'élément capteur (10) étant placé sur une face (13b) opposée au milieu d'une première couche (13) du corps creux (1) en élastomère, laquelle est de préférence en contact direct avec le milieu.

6. Corps creux (1) en élastomère selon l'une quelconque des revendications 3 à 5,
par ailleurs avec une deuxième couche (14), laquelle comporte un support de renfort (14a) et laquelle est placée de préférence sur une face (13b) opposée au milieu de la première couche (13).

7. Corps creux (1) en élastomère selon l'une quelconque des revendications précédentes, la matière élastomère (11) comportant deux zones de contact (12a, 12b) mutuellement opposées qui sont de préférence écartées l'une de l'autre dans la direction (L) de la plus grande extension de la matière élastomère (11).

8. Corps creux (1) en élastomère selon l'une quelconque des revendications précédentes, la matière élastomère (11) comportant un mélange caoutchouteux vulcanisé conducteur qui contient au moins un caoutchouc polaire ou non polaire et au moins un agent de charge conducteur et/ou au moins un additif conducteur et au moins une matière thermoplastique et d'autres additifs.

9. Procédé destiné à détecter la température d'un corps creux (1) en élastomère selon l'une quelconque des revendications précédentes, présentant les étampes :
de la détection d'une grandeur d'une propriété électrique ou diélectrique de la matière élastomère (11) de l'élément capteur (10) et
de la détermination d'une température, en fonction de la grandeur détectée de la propriété électrique ou diélectrique.

10. Procédé selon la revendication 9, présentant par ailleurs les étampes :
de la comparaison de la température déterminée avec une température limite prédéfinie
et
en réponse à un dépassement de la température limite prédéfinie, du déclenchement d'une réaction consécutive.
